## Europäisches Patentamt

## European Patent Office

## Office européen des brevets

(11) Veröffentlichungsnummer: **0 151 797**
A2

(12) **EUROPÄISCHE PATENTANMELDUNG**

(21) Anmeldenummer: 84116243.1

(22) Anmeldetag: 22.12.84

(51) Int. Cl.⁴: **B 03 C 3/70**
**H 01 B 17/14**

(30) Priorität: 11.02.84 DE 3404987

(43) Veröffentlichungstag der Anmeldung:
21.08.85 Patentblatt 85/34

(84) Benannte Vertragsstaaten:
DE FR GB IT

(71) Anmelder: ROBERT BOSCH GMBH
Postfach 50
D-7000 Stuttgart 1(DE)

(72) Erfinder: Haag, Gottlob
Graf-Hartmann-Strasse 20
D-7145 Markgröningen(DE)

(72) Erfinder: Hägele, Karl-Heinz, Dr.
Gerokstrasse 43,
D-7143 Vaihingen(DE)

(72) Erfinder: Härer, Helmut, Dr.
Obere Weinbergstrasse 22
D-7148 Remseck 1(DE)

(54) Hochspannungsisolator.

(57) Es wird ein Hochspannungsisolator vorgeschlagen, der geeignet ist, in Räumen eingesetzt zu werden, die stark mit Feststoffteilchen beladenes Gas führen and insbesondere Verwendung bei elektrostatischen Filtern finden, die zur Reinigung von Abgas dienen, das von Brennkraftmaschinen stammt, die zum Antrieb von Kraftfahrzeugen vorgesehen sind. Der Hochspannungsisolator ist dabei säulenförmig aufgebaut mit im Abstand aufeinander folgenden schirmartig ausgebildeten Rippen (12), an die angrenzend im Isolator jeweils ein Einstich (16) vorgesehen ist, der mit den übrigen Isolatorteilen (20) von geringerem Durchmesser eine scharfe Kante (19) bildet, von der zur Flanke der schirmartigen Rippen (12) Entladungsstrecken gebildet werden. Innerhalb dieser Strecken wird der Isolator von Rußbelägen bzw. von Belägen, die leitfähig sind, freigehalten, so daß der Isolator selbst einen hohen Widerstand gegen Leitströme, die zu nicht tragbaren Verlustleistungen führen würden, bietet.

./...

FIG. 1

R. **19213**
8.2.1984 Bö/Jä

0151797

ROBERT BOSCH GMBH, 7000 Stuttgart 1


Hochspannungsisolator


Stand der Technik


Die Erfindung geht von einem Hochspannungsisolator nach
der Gattung des Hauptanspruchs aus. Ein solcher Hochspannungsisolator ist z. B. durch die US-PS 2 565 458
bekannt, und findet dort Anwendung in einem elektrostatischen Filter, durch das kleine Fremdpartikel wie Staub
aus luftähnlichen Gasen entfernt werden sollen. Die dort
verwendeten Hochspannungsisolatoren haben eine säulenförmige Grundstruktur mit ringförmig verlaufenden Rippen
und dienen der Halterung der von Hochspannung beaufschlagten Abscheideplatten im Innern des Filtergehäuses. Die
dort verwendeten Isolatoren sind ihrer Anwendung zufolge
dem verschmutzten Gas ausgesetzt und können leicht mit
einer Schmutzschicht überzogen werden. Je nach Zusammensetzung dieser Schmutzschicht wird die Schwelle zur Zündung von Oberflächengleitentladungen mehr oder weniger
herabgesetzt. Es fließen über eine leitfähige Fremdschicht
Ableitströme, welche zu permanenten Verlustleistungen der
elektrischen Versorgungseinrichtung des elektrostatischen
Filters führen. Solchen Filter finden auch Anwendung für
die Ausscheidung von Fremdkörpern wie z. B. Ruß aus den
Abgasen von Brennkraftmaschinen. Insbesondere bei selbstzündenden Brennkraftmaschinen enthalten die Abgase oft

. . .

19213

eine recht große Menge von ursprünglich sehr fein verteiltem Ruß. Dieser bildet auf den der Abgasatmosphäre ausgesetzten Isolatoren recht schnell eine durchgehende Schicht gleichmäßiger Stärke, wobei der Ruß die Eigenschaft hat, daß er relativ gut leitfähig ist. Daher treten gewöhnlich sehr rasch elektrisch Nebenschlüsse über die Isolatoren auf, was eine erhebliche Belastung der Hochspannungsversorgung des elektrostatischen Filters bedeutet. Insbesondere bei Verwendung von elektrostatischen Filtern für Brennkraftmaschinen, die in Kraftfahrzeugen betrieben werden, sollte die Hochspannungsanlage zur Spannungsversorgung des Filters auf Dauer möglichst ohne Nebenschluß und mit möglichst geringen Verlusten an Hochspannungsleistung betrieben werden können. Die Verlustleistung bzw. Betriebsleistung des elektrostatischen Filters stellt eine Minderleistung der von der Brennkraftmaschine an das Fahrzeug abgegebenen Leistung dar. Eine zu hohe Verlustleistung über die Isolatoren würde demzufolge einen unerwünschten Kraftstoffmehrverbrauch beim Betrieb des Kraftfahrzeugs nach sich ziehen.

Während die Oberflächengleitentladung über eine durchgehende Verschmutzungsschicht auf der Oberfläche des Isolators sich bei Kraftfahrzeughochspannungsanlagen nicht so sehr negativ auswirkt, führen jedoch die Leistungsverluste, die durch Ableitströme auftreten, unter Umständen zum Totalausfall der Hochspannungsversorgungsanlage, wenn die Leistungsverluste in die Größenordnung der gesamten zur Verfügung stehenden Hochspannungsleistung kommen. Die Oberflächengleitentladungen treten regelmäßig nur kurzzeitig auf, da durch die dabei auftretenden Spannungseinbrüche, bedingt durch die begrenzte Leistungsfähigkeit der Kraftfahrzeug-Hochspannungsanlage, die Entladungen wieder unterbrochen werden.

...

0151797

**19213**

Die eingangs genannten bekannten Isolatoren würden bei
einer Verwendung eines elektrostatischen Filters für die
Entrußung von Dieselabgasen demzufolge die Funktionsfähigkeit der Hochspannungsversorgungsanlage schnell zum Erliegen bringen, da bereits innerhalb weniger Betriebsstunden
sich auf den Isolatoren eine mehrere mm dicke, leitfähige
Rußbrennschicht bilden kann.

Es ist ein anderer elektrostatischer Filter für die Reinigung von Abgasen von Verbrennungsmaschinen durch die GB-
PS 1 0 22 714 bekannt, bei der das Problem der Rußverschmutzung des die Elektroden stützenden Isolators in
einer recht aufwendigen Weise gelöst werden soll. Bei der
durch diese Patentschrift bekannten Rußfiltereinrichtung
sind axiale Elektroden innerhalb eines Abgas führenden
Rohres vorgesehen, an dessen Enden die Elektroden durch je
zwei Isolatorteile gehalten werden. Einer dieser Isolatorteile ist glockenförmig ausgebildet und mit dem Gehäuse
der Reinigungsanlage verbunden, während der andere Isolatorteil scheibenförmig ausgebildet ist und porös ist. Zwischen dem scheibenförmigen Isolatorteil und dem glockenförmigen Isolatorteil ist ein Raum eingeschlossen, der
durch die Elektrodenzuführung mit Druckluft beaufschlagt
ist. Der scheibenförmige Isolatorteil grenzt unmittelbar
an die rußbeladene Atmosphäre im Innern der Einrichtung und
soll vom Ruß dadurch freigehalten werden, daß die Druckluft
durch seine Poren ins Innere der Einrichtung geblasen
wird. Diese Einrichtung ist recht aufwendig, zudem führt
diese Bauweise zu recht großen Baugrößen, da der zweite
Isolatorteil zur Spannungsisolierung von beispielsweise
20 kV einen großen Durchmesser aufweisen muß.

...

Vorteile der Erfindung

Der erfindungsgemäße Hochspannungsisolator mit den kennzeichnenden Merkmalen des Hauptanspruchs hat demgegenüber
den Vorteil, daß er auf die Dauer einen wartungsfreien und
nebenschlußfreien Betrieb einer Hochspannungsanlage im Abgassystem einer Brennkraftmaschine ermöglicht. Durch die
Ausgestaltung des Hochspannungsisolators wird gezielt ein
Mechanismus für eine Art Selbstreinigung der Isolatoroberfläche bereitgestellt. Zusatzeinrichtungen zur Reinigung
der Isolatoroberfläche entfallen. Es sind nur geringfügige
Verlustleistungen erforderlich, um die Isolierfähigkeit des
Isolators durch einen immer wieder erfolgenden Abbrand des
Rußes zu erhalten. Diese Verlustleistung wird direkt in
Heizenergie zum Abbrennen des Rußes abgewandelt und wird
durch den selbstregelnden Charakter des Selbstreinigungsmechanismus auf ein Minimum reduziert.

Durch die in den Unteransprüchen angegebenen Maßnahmen
sind vorteilhafte Weiterbildungen und Verbesserungen gegeben.

Zeichnung

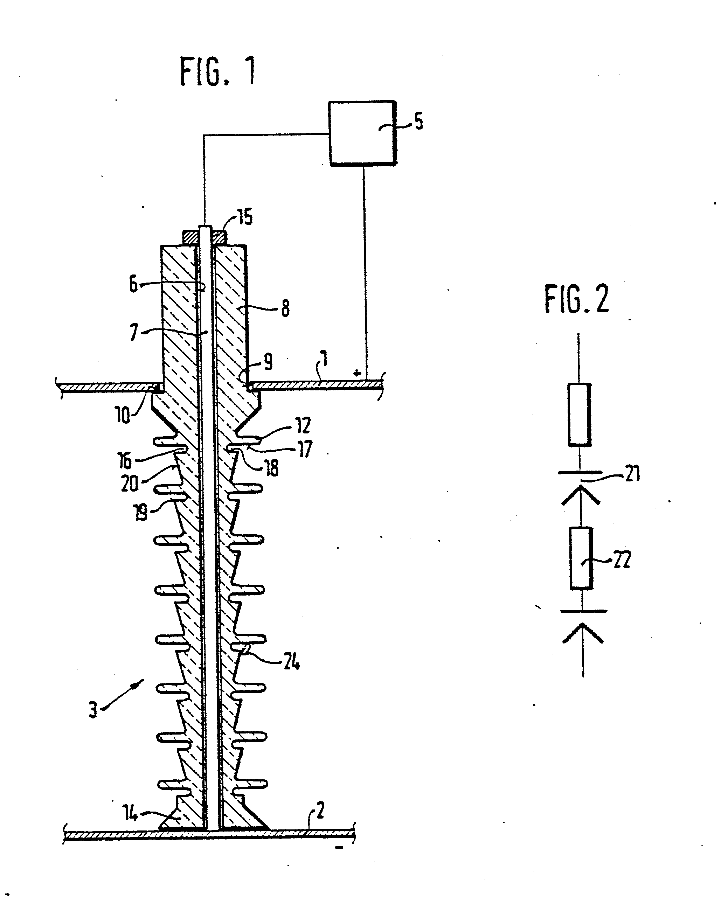

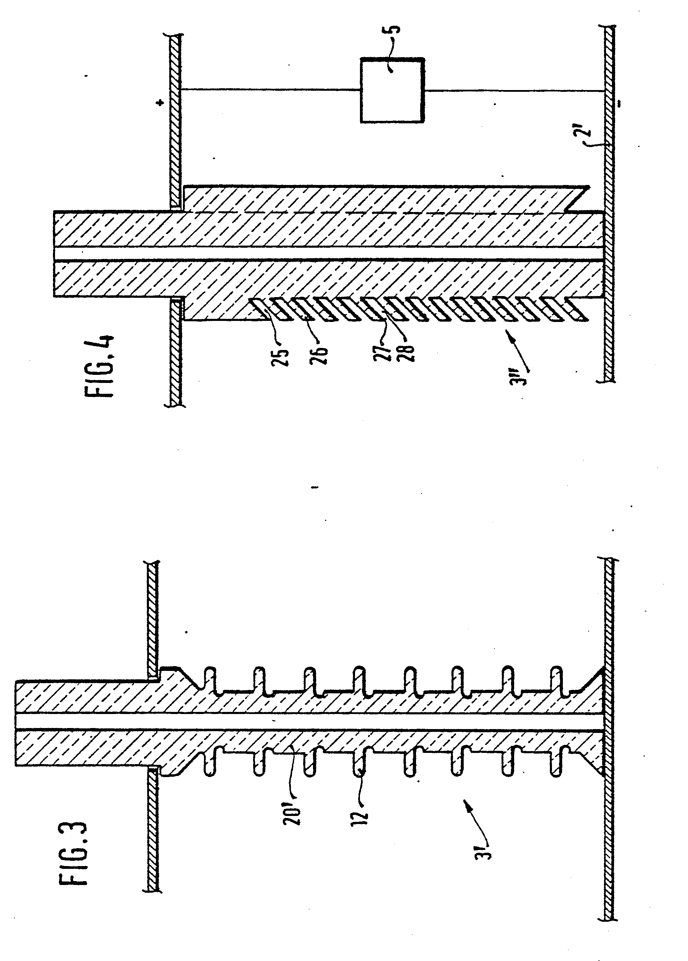

Drei Ausführungsbeispiele der Erfindung sind in der Zeichnung wiedergegeben und werden in der nachfolgenden Beschreibung näher zusammen mit ihren Vorteilen erläutert. Es zeigen
Figur 1 einen Längsschnitt durch ein erstes Ausführungsbeispiel des Hochspannungsisolators mit einer koaxial eingesetzten Elektrode, Figur 2 ein Ersatzschaltbild für eine
Teilstrecke des Hochspannungsisolators, Figur 3 ein zweites
Ausführungsbeispiel des Hochspannungsisolators und Figur 4
ein drittes Ausführungsbeispiel des Hochspannungsisolators.

...

Beschreibung der Ausführungsbeispiele

In Figur 1 ist ein Hochspannungsisolator im Schnitt dargestellt, der eine positiv gepolte Gehäusewand 1 eines nicht weiter dargestellten elektrostatischen Filters oder einer Hochspannung führenden Einrichtung bei Kraftfahrzeugen mit einer negativ gepolten Elektrode 2 mechanisch verbindet. Im Bereich zwischen Gehäusewand 1 und Elektrode 2 erstreckt sich der Isolator 3 säulenförmig und ist z. B. einem rußbeladenen Abgas von Brennkraftmaschinen ausgesetzt. Zur Polung der Elektrode 2 ist zwischen Gehäuse 1 und dieser eine Hochspannungsversorgungsquelle 5 geschaltet. Der Hochspannungsisolator kann wie in Figur 1 gezeigt eine axiale Bohrung 6 aufweisen, durch die ein metallischer Leiter 7 geführt ist, der an seinem einen Ende mit der Elektrode 2 verbunden ist und an seinem anderen Ende aus dem Isolator 3 herausgeführt ist und mit der Hochspannungsquelle 5 verbunden ist. Über den metallischen Leiter wird damit die Elektrode 2 an den Minuspol der Hochspannungsquelle gelegt, während das Gehäuse 1 am Pluspol liegt.

Der Isolator 3 weist einen kreiszylindrischen Teil 8 auf, der durch eine Bohrung 9 in der Wand des Gehäuses 1 nach außen ragt und in Richtung zum Innern des Gehäuses in eine Schulter 10 übergeht, an der er zur Anlage am Gehäuse 1 gelangt. Durch geeignete, hier nicht weiter dargestellte Mittel kann der Isolator an dieser Schulter fest mit dem Gehäuse verbunden werden.

Im Innern des Gehäuses, im Abgas führenden Teil weist der Isolator ringförmige Rippen 12 auf, die mit gleichem Durchmesser in gleichem Abstand aufeinander folgend sich über die Länge des Isolators bis zur Elektrode 2 hin erstrecken. Am elektrodenseitigen Ende geht der Isolator in einen Stützfuß 14 über, der der Verbindung der Elektrode mit dem Isolator dienen kann. Im vorliegenden Beispiel erfolgt

...

die Verbindung über den axialen metallischen Leiter 7, der am äußersten Ende des kreiszylindrischen Teils 8 mit einer Kontermutter 15 im Isolator verspannt ist.

Die ringförmigen Rippen 12 gleichen den Basiskörper weit überragenden Scheiben oder Schirmen, die mit Abstanzstücken geringerem Durchmesser auf dem Isolator aufgereiht sind. Unmittelbar angrenzend an jede Rippe weist der Isolator einen ringförmigen Einstich 16 auf, dessen eine Begrenzungswand die Flanke 17 der ringförmigen Rippe 12 ist und dessen andere Begrenzungswand 18 in einer scharfen Ringkante 19 endet. Diese Kante ist gegenüber dem Außendurchmesser der ringförmigen Rippe 12 erheblich zurückgesetzt. Auch der sich anschließende Isolatorteil 20 verjüngt sich kegelförmig in Richtung zur Elektrode 2 bzw. zur jeweils nächsten Rippe 12, derart, daß der geringste Durchmesser des Isolators beim Übergang zur nächsten Rippe etwa dem Durchmesser des Isolators am Einstich 16 entspricht. Das obenbeschriebene Teilstück wiederholt sich im gezeigten Beispiel achtmal über die gesamte Länge des im Abgasteil befindlichen Isolators.

Der dargestellte Isolator ist so konzipiert, daß speziell die Leistungsverluste aufgrund von Ableitströmen durch eine Art Selbstreinigung der Isolatoroberfläche möglichst klein gehalten werden. In stark mit Ruß beladenen Abgasen wird die Isolatorfläche schnell gleichmäßig mit einer Rußschicht, die auch noch weitere Fremdstoffe enthalten kann, überzogen. Dieser Belag wird bei in Betrieb befindlicher Anlage, also wenn zwischen Gehäuse 1 und Elektrode 2 eine Hochspannung von ca. 20 kV gelegt ist, im Bereich der Einstiche 16 unterbrochen. Dies erfolgt dadurch, daß bei Spannungsbeaufschlagung in dem Belag Ableitströme fließen. Wenn auch diese nur geringfügig sind, so werden zwischen der Kante 19 und der Flanke 17 der schirmartigen Rippen 12 starke elektrische Felder von beispielsweise E = 10 kV/cm

...

aufgebaut, welche ausreichend groß sind, um an dieser Stelle Oberflächenteilentladungen wie Glimm- oder Bogenentladungen wiederholt zünden zu können. Die hierzu erforderlichen hohen Potentialdifferenzen zwischen der Kante 19 und der Flanke 17 entstehen durch lokal erhöhte Belagwiderstände im Bereich der Einstichoberfläche. Deren Ursache ist einerseits der örtlich verjüngte Durchmesser des Isolators an dieser Stelle, andererseits aber sind auch die Belagdicken im Bereich der Einstiche geringer, weil die elektrischen Felder E die Einstichoberfläche grundsätzlich auch gegen großen Anfall von Belagspartikeln abschirmen. Anliegende Rußteilchen werden durch die Feldkräfte entweder auf die Isolatorteile 20 oder auf der weiter außen liegenden Oberfläche der Rippen 12 abgeschieden, bevor sie die Oberfläche im Bereich des Einstichs 16 erreichen.

Die gezündeten Oberflächenteilentladungen brennen den Ruß, der sich trotz der Feldabschirmung im Bereich der Einstiche niedergeschlagen hat, mit besonders großer Wirksamkeit ab. Geringe mittlere Gesamtverlustleistungen von wenigen Watt, z. B. 5 Watt, reichen damit aus, um den Ruß lokal auf Temperaturen von der Größenordnung um 1000 °C aufzuheizen. Der erste Grund hierfür ist, daß es im Bereich der Einstiche durch den großen Spannungsbedarf der brennenden Oberflächenteilentladung zu einem lokal stark konzentrierten Umsatz der gesamten, am Isolator entnommenen Leistung kommt. Zudem erfolgt der Energieumsatz von elektrischer in Heizenergie im wesentlichen innerhalb des Belags selbst. Leckwärmeströme durch Wärmeableitung und Wärmeübertragung, wie sie bei einer Fremdbeheizung der Rußschicht auftreten würden, werden dadurch weitgehend vermieden.

Glimm- und Bogenentladungen tragen mit unterschiedlichen Mechanismen zum Rußabbrand bei. Feine Rußbeläge mit einer

. . .

0151797

19213

Belagsstärke von d kleiner 0,5 mm werden vollständig und nahezu verlustfrei mit einer Leistung P = 1 Watt durch ständig brennende Glimmentladung abgetragen. Die Isolatoroberfläche wird in der Glimmentladung durch den Ionenbeschuß der in der Glimmentladung beschleunigten Ionen vollkommen blank gereinigt. Dickere Rußbeläge mit einer Schichtstärke von größer 0,5 mm, welche bei größerem Rußanfall entstehen können, werden dagegen durch die große Hitzeentwicklung von etwa 3500° K im kathodenseitigen Fußpunkt einer Lichtbogenentladung von der Kante 19 zur Flanke 17 abgebrannt.

Für ein stabiles Arbeiten des Isolators ist zusätzlich eine ausreichende Überschlagsfestigkeit des Isolators erforderlich. Diese steigt zwar einerseits mit der Zahl der Rußabbrandstellen, den Einstichen 16, andererseits ist es aber auch notwendig, daß zwischen den Abbrandstellen Reste der Isolatorfläche mit möglichst dünnen und gleichmäßig verteilten Rußschichten bedeckt bleiben. Die verschmutzte Isolatoroberfläche ist dann ersatzweise vergleichbar mit einer Serienschaltung von Gasentladungsstrecken 21, im Bereich der Einstiche 16 und ohmschen Widerstände 22 im Bereich der restlichen Oberflächen, dem Isolatorteil 20 und der Oberfläche der Rippen 12 bis zum Fußpunkt der Oberflächenteilentladung. Dieses Ersatzschaltbild ist in Figur 2 dargestellt. Werden lokal begrenzte Oberflächenentladungen gezündet, so wirken die zwischengeschalteten Rußbeläge als stromstabilisierende Vorwiderstände. Ist der ohmsche Widerstand dieser Beläge nicht ausreichend groß, so käme es nach dem Zünden der Oberflächenentladungen wegen der fallenden Strom-Spannungscharakteristik von Entladungen zu einem fortwährenden Ansteigen des Stromes. Ein stetiges Vorwandern der Teilentladung auf der Isolatoroberfläche und damit ein Fremdschichtüberschlag wären die unvermeidbare Folge.

Durch die schirmartigen, ringförmigen Rippen 12 erhält
man bei richtiger Dimensionierung des Durchmesserverhältnisses Rippenaußendurchmesser/Durchmesser des Isolatorteils 20 einen maximalen Kriechweg für eine gegebene Isolationslänge. Außerdem sollten die Durchmesser der Strünke,
der zwischenliegenden Isolatorteile 20, möglichst klein
gewählt werden und die Rußschichtstärke möglichst klein
bleiben. Letzteres wird begünstigt, wenn der Isolator
in Abgasströmen angeordnet ist, die eine hohe Strömungsgeschwindigkeit aufweisen, da dabei durch die Strömungskräfte die Bildung zu starker Beläge verhindert wird.
Entsprechend diesen Parametern wird die Länge des Isolators
gewählt und so dimensioniert, daß bei gegebener Betriebsspannung möglichst selten Überschläge vorkommen.

Der Isolator kann bei prinzipiell gleicher Funktionsweise
unterschiedlich ausgestaltet sein. So ist beim Ausführungsbeiapiel nach Figur 3 die Form der zwischenliegenden Isolatorteile 20' abweichend von den kegelförmig ausgebildeten
Isolatorteilen 20 bei der Ausführung nach Figur 1 zylindrisch ausgeführt, obwohl die kegelförmige Ausführung den
Vorteil aufweist, daß die Oberfläche dann angenähert parallel zu den Feldlinien des sich in der Nähe des Gleichspannungsisolators ausbildenden elektrischen Feldes verläuft.
Die Entladungen 24 in Figur 1 legen sich damit quasi gut an
die Rußschicht auf dem Isolatorteil an. Kurzschlüsse dadurch, daß Lichtbögen, welche sich von der Oberfläche der
Isolatorteile abgelöst haben und durch thermischen Auftrieb
von Rippe zu Rippe brennen, werden dadurch stark an der
Entstehung gehindert. Zudem wird die reinigende Wirkung
der Entladungen optimiert.

Die Zuordnung der Kanten 19 zu den Flanken der schirmartigen Rippen 12 hat den Vorteil, daß bereits durch den
scharfen Durchmesserübergang zwischen dem Durchmesser an

...

der Kante 19 zum Außendurchmesser der Rippe 12 eine Feldverdichtung auftritt und damit, wie bereits obenstehend
erläutert, eine Abschirmung dieses Bereichs des Isolators
von anfliegendem Ruß erfolgt. Dieser Effekt wird dann noch
durch die mögliche Entladung im Bereich des Einstichs verbessert.

Bei den Ausführungsbeispielen nach Figur 1 und 2 können
Einstiche auch beidseitig der Schirme 12 vorgesehen werden,
doch wird dadurch die verbleibende Widerstandsstrecke der
rußbeschichteten Isolatorteile 20 bzw. 20' erheblich reduziert. Treten Entladungen an den Einstichen beiderseits
der Schirme auf, so verstärkt sich die Tendenz, daß die
Entladung bzw. der Abbrand auf dem Isolatorteil 20 voranschreitet und daß es zu einem Überschlag von Schirm zu
Schirm kommt, was zu vermeiden ist, da dies wie bereits
erläutert zum vollständigen Ausfall der Hochspannungsanlage führt.

Eine dritte Ausführungsform ist in Figur 4 dargestellt.
Dort ist der Hochspannungsisolator 3" ebenfalls säulenförmig ausgeführt und weist an seiner Oberfläche Einstiche
25 auf, die dachartig geneigte, ringförmige Schirme 26
zwischen sich bilden. Der äußerste Durchmesser der Schirme
bildet jeweils eine scharfe Ringkante 27, deren kürzester
Abstand zum nachfolgenden Schirm auf dessen Flanke 28
liegt derart, daß zwischen der Kante 27 und der Flanke 28
eine Entladung stattfinden kann mit dem thermisch heißen
Fußpunkt auf der Flanke. Durch solche Bogenentladungen
wird der auf den Flanken der Schirme 26 abgelagerte Ruß
ebenfalls abgebrannt, was besonders gut bei negativer
Polung der Elektrode 2' erfolgt, weil dann der kathodenseitige heiße Lichtbogenfußpunkt auf der Schulter endet.

...

Die in vorstehenden Ausführungsbeispielen ringförmig gestalteten Rippen und Einstiche können auch als wedelförmig fortlaufende Rippen und Einstiche ausgeführt werden bei gleicher Wirkungsweise.

Die Rippen im Ausführungsbeispiel nach Figur 1 und 3 können weiterhin auch dachartig geneigt sein.

Die beschriebenen Isolatoren können sowohl als reine Stützisolatoren verwendet werden als auch für Stützisolatoren mit Spannungszuführung zu Elektrode 2 bzw. 2'. Im Betrieb weisen die Isolatoren nur eine geringfügige Verlustleistung auf, da der Reinigungsmechanismus selbstregelnden Charakter hat. Große Schichtstärken von Ruß auf dem Isolator verursachen zunächst eine hohe Verlustleistung, die gleichzeitig aber mit einer starken Reinigungswirkung an der Abbrandstelle verbunden ist. Damit vergrößern sich aber schnell die Leitungswiderstände, was dann zur raschen Verringerung der zunächst hohen Verlustleistung führt. Der Isolator eignet sich somit gesonders gut zur Isolierung von Hochspannungsanlagen, die mit Ruß verunreinigte Abgase führen und von der Versorgung von Brennkraftmaschinen abhängen, die zum Antrieb von Kraftfahrzeugen dienen.

R. **19213**     0151797

8.2.1984 Bö/Jä


ROBERT BOSCH GMBH, 7000 Stuttgart 1


Ansprüche


1. Hochspannungsisolator zum Einbau in stark mit Feststoffteilchen beladenes Gas führende Räume., insbesondere
in von Brennkraftmaschinen stammendes Abgas führende
Räume mit einem säulenförmigen Grundkörper, der an seiner
Mantelfläche in axialer Richtung fortschreitend aufeinander
folgende Rippen (12) aufweist, dadurch gekennzeichnet,
daß in axialer Richtung fortschreitend unmittelbar angrenzend an zumindest einer Seite einer jeden, schirmartig ausgebildeten Rippe (12) ein Einstich (16) vorgesehen ist,
dessen der angrenzenden Rippe gegenüber liegende Begrenzungswand (18) in einer scharfen Außenkante (19) mündet,
die Begrenzung einer zur Flanke (17) der angrenzenden
Rippe (12) bestehenden Entladungsstrecke ist und die
gegenüber dem Außendurchmesser der angrenzenden Rippe
radial nach innen versetzt ist.


2. Hochspannungsisolator nach Anspruch 1, dadurch gekennzeichnet, daß der sich an die scharfe Kante (19) axial
anschließende und zur nächsten Rippe führende Teil (20')
des Isolators kreiszylindrisch ausgebildet ist.


3. Hochspannungsisolator nach Anspruch 1, dadurch gekennzeichnet, daß der sich an die scharfe Kante (19) axial
anschließende und zur nächsten Rippe führende Teil des
Isolators (20) zur nächsten Rippe hin verjüngend kegelstumpfförmig ausgebildet ist.


                                           ...

4. Hochspannungsisolator nach einem der Ansprüche 2 oder 3, dadurch gekennzeichnet, daß nur jeweils auf der einen Seite der Rippen (12) der Einstich (16) vorgesehen ist.

5. Hochspannungsisolator nach Anspruch 1, dadurch gekennzeichnet, daß die Rippen (26) dachartig geneigt und zueinander parallel sind.

6. Hochspannungsisolator nach Anspruch 5, dadurch gekennzeichnet, daß die Rippen voneinander durch den Einstich (25) unmittelbar getrennt sind und in eine scharfe Außenkante (27) enden, die jeweils mit der Flanke (28) der benachbarten Rippe die Entladungsstrecke bildet.

7. Hochspannungsisolator nach einem der vorstehenden Ansprüche, dadurch gekennzeichnet, daß die Rippen (12, 26) und die Einstiche (16, 25) ringförmig umlaufend sind.

8. Hochspannungsisolator nach einem der vorstehenden Ansprüche, dadurch gekennzeichnet, daß der Isolator eine axiale Bohrung (6) aufweist, zur Aufnahme eines metallischen Leiters (7).

9. Hochspannungsisolator nach einem der vorstehenden Ansprüche, dadurch gekennzeichnet, daß der Isolator Stützschultern (10) zur Verbindung mit den elektrisch leitenden Gehäuseteilen aufweist.

10. Hochspannungsisolator nach einem der vorstehenden Ansprüche 4 bis 7, dadurch gekennzeichnet, daß der Isolator so den an ihn angrenzenden Potentialflächen zugeordnet ist, daß die scharfe Kante (19) kathodenseitig und die die Entladungsstrecke andersseitig begrenzende Flanke der Rippen (12) anodenseitig sind.

# FIG. 1

# FIG.2

FIG.3

FIG.4

20'

12

3'

25

26

27

28

3''

5

2''